# EUROPEAN PATENT SPECIFICATION

(11) **EP 3 976 226 B1**
(45) Date of publication and mention of the grant of the patent: **16.07.2025**
(21) Application number: 20815456.7
(22) Date of filing: 28.05.2020
(51) Int. Cl.: B01D 47/06, B01D 47/12, B01D 53/78

(54) **PACKED TOWER FOR A SCRUBBER**
WASCHTURM FÜR EINEN WÄSCHER
TOUR À GARINSSAGE POUR ÉPURATEUR

(30) Priority: 28.05.2019 KR 20190062758
(43) Date of publication of application: 06.04.2022
(73) Proprietor: CSK Inc., Yongin-si 17030 (KR)
(72) Inventor: NOH, MyungKeun, Yongin-si Gyeonggi-do 17030 (KR); CHO, HyeonYun, Yongin-si Gyeonggi-do 17030 (KR); PARK, JiYoung, Yongin-si Gyeonggi-do 17030 (KR); LEE, HeonSeung, Yongin-si Gyeonggi-do 17030 (KR); CHOI, Minsik, Seoul (KR); SEONG, Ki-Hyeok, Yongin-si Gyeonggi-do 17030 (KR); CHEON, Jonghyeok, nseong-si Gyeonggi-do (KR); LEE, YoungWoong, Yongin-si Gyeonggi-do 17030 (KR); PARK, Sangjoon, Yongin-si Gyeonggi-do 17030 (KR)
(74) Representative: Norton, Ian Andrew
(86) International application number: PCT/IB2020/055057
(87) International publication number: WO 2020/240454

(56) References cited:
- CN-A- 108 498 006
- CN-U- 202 569 944
- CN-U- 204 208 418
- JP-A- 2006 077 576
- JP-A- H0 938 453
- KR-A- 20140 102 889
- KR-B1- 100 789 719
- KR-B1- 100 824 033
- US-A- 5 298 043
- US-A1- 2018 243 761

## Description

### [Technical Field]

The present invention relates to a packed tower which is mounted on a scrubber and which cleans exhaust gas generated in processes in the electronics industry.

### [Technological Background of the Invention]

The exhaust gas which is generated in semiconductor production processes, LCD production processes, OLED production, and other processes in the electronics industry consists of VOC, PFC gas, moisture and other foreign substances. Much exhaust gas is generated in semiconductor etching processes or chemical deposition processes, including gas that promotes global warming. Furthermore, PPC gas contained in the exhaust gas is known to be difficult to decompose during processing. PFC gas contained in exhaust gas is treated by means of a heated, absorption or plasma scrubber.

Such a heated scrubber may generally comprise a burner component that creates flames to heat the exhaust gas, a reaction chamber mounted on a lower portion of the burner component to cause the exhaust gas to combust and react so as to generate by-product particles, and a water tank disposed on one side of a lower portion of the reaction chamber to capture the by-product particles and soluble exhaust gas. Moreover, the heated scrubber may further comprise a packed tower coupled to an upper portion of another side of the water tank to additionally capture by-product particles and soluble exhaust gas contained in the exhaust gas that passes through the reservoir. The packed tower may spray water on the exhaust gas that passes through from a lower portion to an upper portion so as to capture by-product particles of the exhaust fumes.

Exhaust gas discharged by passing through such a packed tower contains a relatively large amount of by-product particles and moisture depending on the type of semiconductor process and this has recently emerged as an issue. The by-product particles and moisture contained in the exhaust gas accumulate in ducts through which the exhaust gas is discharged and can cause the ducts to become clogged.

### [Details of the Invention]

### [Problem to be Solved]

An object of the present invention is to provide a packed tower for a scrubber which can reduce by-product particle and moisture content in discharged exhaust gas.

### [Means of Solving the Problem]

The packed tower for a scrubber of the present invention is defined in claim 1 and comprises a screw spray module that sprays water when it causes exhaust gas which flows into the interior to rise in whirlwind form and a venturi spray module that sprays water while causing the exhaust gas that flows into the interior to rise in a central direction.

Moreover, the packed tower for a scrubber of the present invention comprises a lower inflow module that provides a route for exhaust gas that flows in to flow towards an upper portion, a horizontal spray module that sprays water while causing the exhaust gas that flows into the interior to rise, a pall spray module that sprays water as the exhaust gas that flows into the interior makes contact with the pall rings, and a gas spray module that sprays captured gas into the exhaust gas that flows into the interior.

Moreover, in the packed tower for a scrubber of the present invention, the horizontal spray module is disposed at an upper portion of the lower inflow module, the screw spray module may be disposed at an upper portion of the horizontal spray module, the venturi spray module may be disposed at an upper portion of the screw spray module, the pall spray module may be disposed at an upper portion of the venturi spray module, and the gas spray module may be disposed at an upper portion of the pall spray module.

Moreover, the screw spray module comprises a screw housing formed in the shape of a cylinder having an open upper portion, open lower portion, and a hollow interior, a screw support shaft disposed in a central axis of the screw housing on the inside of the screw housing, a screw blade that creates a screw passage in the shape of a whirlwind on the inside of the screw housing, and at least two screw spray nozzles which spray water on the exhaust gas that flows through the screw passage and which are spaced along the inner circumferential surface of the screw housing.

Moreover, the venturi spray module comprises a venturi housing formed in the shape of a cylinder having an open upper portion, open lower portion, and a hollow interior, a venturi plate which is equipped with a venturi hole in the centre thereof and which has the shape of a cone wherein the lower portion side inclines toward the top from the direction of the external diameter to the internal diameter thereof, and a venturi spray nozzle that sprays water through the venturi hole.

Moreover, the venturi spray module comprises a venturi guard formed in plate shape which has a large diameter or a diameter that corresponds to the diameter of the venturi hole, and which is disposed spaced apart from an upper portion of the venturi hole.

Moreover, the horizontal spray module may further comprise a cylindrical horizontal housing having an open upper portion, open lower portion, and a hollow interior and at least two horizontal spray nozzles that are spaced along an inner circumferential surface of the horizontal housing.

Moreover, the pall spray module may further comprise a cylindrical pall housing having an open upper portion, open lower portion, and a hollow interior, a lower support net which is a plate having multiple support holes that pass vertically and which is coupled with the lower portion of the pall housing, pall rings that are disposed at an upper portion of the lower support net, and a pall spray pipe that is disposed at an upper portion of the pall rings and sprays water on an upper portion of the pall rings.

Moreover, the gas spray module may further comprise a cylindrical gas housing having an open upper portion, open lower portion, and a hollow interior, a gas nozzle main body which is disposed inside the gas housing and which comprises a gas spray nozzle that is formed in ring shape and is disposed on the inside of the gas housing and sprays captured gas into the exhaust gas that flows in from a lower portion, a gas passage formed in the shape of a ring which is on the inside of the gas nozzle main body and which provides a path for the captured gas to flow through, and a gas spray hole which passes through the inside of the gas nozzle main body from the gas passage and which sprays the captured gas toward the inside of the gas nozzle main body.

### [Effects of the Invention]

The packed tower for a scrubber of the present invention may eliminate by-product particles contained in exhaust gas by having the exhaust gas pass through various modules disposed vertically.

Moreover, the packed tower for a scrubber of the present invention may reduce moisture discharged outside by capturing the moisture contained in the exhaust gas after spraying captured gas into the exhaust gas before it is discharged to the outside.

### [Brief Description of Figures]

Figure 1 is a vertical cross-sectional diagram of the packed tower for a scrubber according to an embodiment of the present invention.
Figure 2 is an enlarged drawing of the screw spray module from Figure 1.
Figure 3 is an enlarged drawing of the venturi spray module from Figure 1.
Figure 4 is an enlarged drawing of the gas spray module from Figure 1.
Figure 5 is a schematic diagram of the scrubber for treating exhaust gas that is equipped with the packed tower for a scrubber according to the embodiment of this invention.

### [Details for Implementing the Invention]

Hereinafter is a detailed explanation of the packed tower for a scrubber according to an embodiment of this invention based on the attached figures and embodiment.

First is an explanation of the structure of the packed tower for a scrubber according to an embodiment of this invention.

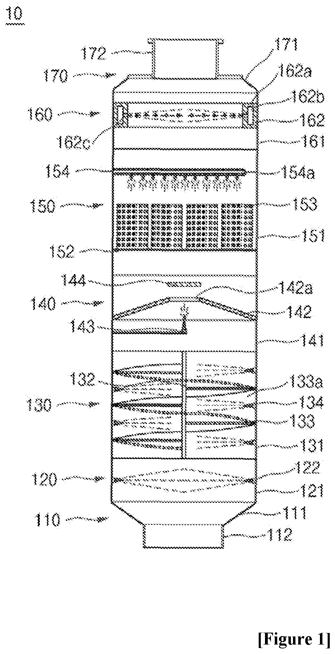

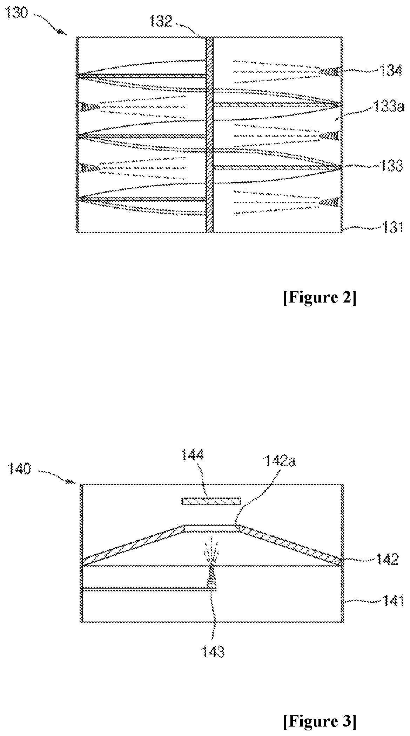

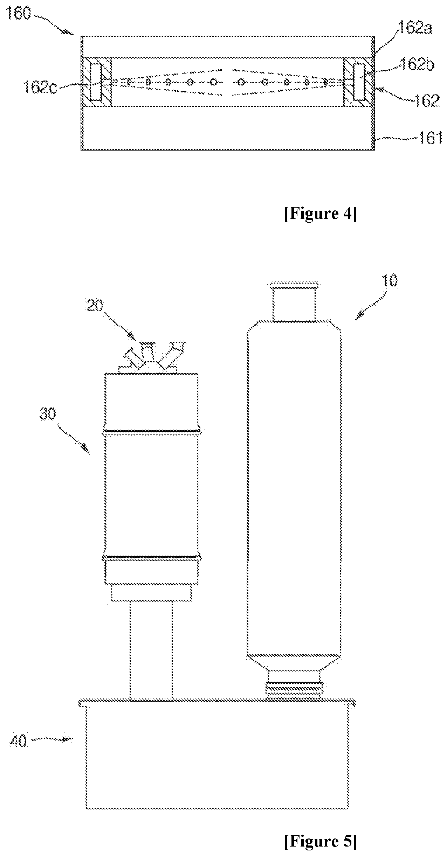

Figure 1 is a vertical cross-sectional diagram of the packed tower for a scrubber according to an embodiment of the present invention. Figure 2 is an enlarged drawing of the screw spray module of Figure 1. Figure 3 is an enlarged drawing of the venturi spray module of Figure 1. Figure 4 is an enlarged drawing of the gas spray module of Figure 1. Figure 5 is a schematic diagram of the scrubber for treating exhaust gas mounted on a packed tower for a scrubber according to the embodiment of this invention.

The packed tower for a scrubber (10) according to an embodiment of this invention may comprise a horizontal spray module (120), screw spray module (130), venturi spray module (140), pall spray module (150), and gas spray module (160) based on Figures 1 to 4. Moreover, the packed tower for a scrubber (10) may comprise a lower inflow module (110) and an upper discharge module (170).

The packed tower for a scrubber (10) may be coupled with a scrubber for treating exhaust gas. For example, a scrubber for treating exhaust gas may comprise a burner component (20), combustion component (30), wet tank (40), and packed tower (10) based on Figure 2. The burner component (20), combustion component (30), and wet tank (40) may be formed in various configurations depending on the type of waste gas that is treated and the semiconductor process, and a detailed explanation shall be omitted here.

In the following description, the inside, the inner surface, or the inner circumferential surface refers to a direction or surface that faces in the direction of the centre in Figure 1, and the outside, outer surface, or outer circumferential surface refer to the opposite direction or surface thereof. Moreover, the upper side or upper surface refers to the direction or surface that faces toward the upper portion in Figure 1, and the lower side or lower surface refers to the direction or surface that faces the lower portion in Figure 1.

The packed tower for a scrubber (10) is not illustrated in detail, but upon combining each module from top to lower portion, a flange, O ring, or another similar sealing method may be additionally disposed between the modules in order to seal the area between modules that are disposed at the upper and lower portions. Therefore, the packed tower for a scrubber (10) may be formed such that water does not escape from between each module.

The packed tower for a scrubber (10) may be formed so that the modules are stacked from a lower portion in the order of horizontal spray module (120), screw spray module (130), venturi spray module (140), pall spray module (150), and gas spray module (160). Here, in the packed tower for a scrubber (10), the exhaust gas flows in through the horizontal spray module (120) that is disposed at the lowest portion and is discharged to the outside by passing it through the screw spray module (130), venturi spray module (140), pall spray module (150), and gas spray module (160). In the packed tower for a scrubber (10), the upper discharge module (170) is connected to pipes in the semiconductor process line and the exhaust gas can be discharged as negative pressure is produced by a vacuum pump that is connected to the pipes.

Moreover, the horizontal spray module (120), screw spray module (130), venturi spray module (140), pall spray module (150), and gas spray module (160) may be formed in the form of modules that are detachable from each other. The packed tower for a scrubber (10) may be formed by selectively stacking modules that are necessary depending on the volume and type of exhaust gas discharged. Therefore, the packed tower for a scrubber (10) may be formed by including the screw spray module (130) and venturi spray module (140) and additionally other modules. For instance, the packed tower for a scrubber (10) may include the screw spray module (130) and venturi spray module (140) and may further include the horizontal spray module (120). Moreover, the packed tower for a scrubber (10) may be formed by including two or more of any given type of module depending on the type of exhaust gas and treatment efficiency. Moreover, the packed tower for a scrubber (10) may include two or more of any given type of module and may be formed so that the modules are disposed adjacent to each other or in different locations. Moreover, in the packed tower for a scrubber, the order of stacking the horizontal spray module (120) that sprays water, screw spray module (130), venturi spray module (140), and pall spray module (150) may be changed depending on the number of by-product particles contained and the amount of exhaust gas to be treated.

The packed tower for a scrubber (10) is disposed at an upper portion of one side of the wet tank (40) that constitutes the scrubber for treating exhaust gas and a lower portion thereof is connected to the wet tank (40). The packed tower for a scrubber (10) treats exhaust gas that passes through the wet tank (40) and flows in from a lower portion. Moreover, the water that is sprayed in the packed tower for a scrubber (10) and the by-product particles fall downward and flow into the wet tank (40).

The lower inflow module (110) may comprise a lower cover (111) and lower inlet pipe (112). The lower inflow module (110) is coupled with the wet tank (40) that is disposed at a lower portion thereof. In this case, a lower portion of the lower inlet pipe (112) is coupled with the wet tank (40). The lower inflow module (110) provides a path so that the exhaust gas can flow in from the wet tank (40) to an upper portion. However, if the horizontal spray module (120) is directly coupled with the wet tank (40), the lower inlet module (110) may be omitted.

The lower cover (111) may be formed in the shape of a cylinder having a hollow interior, an open upper portion, and open lower portion. Moreover, the lower cover (111) may be formed in the shape of a funnel wherein the diameter increases in an upward direction.

The lower inlet pipe (112) has an open upper portion, and open lower portion and may be formed in the shape of a pipe having the same diameter. An upper portion of the lower inlet pipe (112) may be coupled with a lower portion of the lower support cover. The inside of the lower inlet pipe (112) may be connected to the inside of the lower cover (111). The lower inlet pipe (112) may be omitted in the lower inlet module (110) if the lower cover (111) is directly coupled with the wet tank (40).

The horizontal spray module (120) may comprise a horizontal housing (121) and horizontal spray nozzle (122). The horizontal spray module (120) may be coupled with the lower inlet module (110). The horizontal spray module (120) sprays water on the exhaust gas that flows into the interior. More specifically, the horizontal spray module (120) sprays water on the exhaust gas that rises from the lower inlet module (110) and the by-product particles contained in the exhaust gas fall downward. The horizontal spray module (120) may drop relatively large by-product particles.

The interior of the horizontal housing (121) is hollow and it is formed in the shape of a cylinder having an open upper portion, and open lower portion. The horizontal housing (121) is formed at a prescribed height necessary for spraying water so that it makes contact with the exhaust gas that flows in from a lower portion. If a lower portion of the horizontal housing (121) is coupled with the lower inlet module (110), it may be formed having the same diameter as an upper portion of the lower cover (111) of the lower inlet module (110). The horizontal housing (121) may also be formed having a different diameter to the lower cover (111) and the area between the lower cover (111) may be sealed by using a separate flange (not illustrated) or other method.

The horizontal spray nozzle (122) may be formed in the shape of a regular water-spraying nozzle. There shall be at least two horizontal spray nozzles (122) formed and preferably at least five nozzles. At least two of the horizontal spray nozzles (122) may be spaced apart from each other along the inner circumferential surface of the horizontal housing (121). For the horizontal spray nozzles (122), multiple nozzles may be spaced at intervals of 45 degrees, 90 degrees, or 180 degrees on the inner circumferential surface of the horizontal housing (121) and coupled thereto. At least two horizontal spray nozzles (122) may be spaced apart from each other in a vertical direction on the inner circumferential surface of the horizontal housing (121). The horizontal spray nozzle (122) may be coupled with the inner circumferential surface of the horizontal housing (121) so as to spray water toward the centre of the horizontal housing (121). The horizontal spray nozzle (122) may be formed so that it sprays water to the entire inner area of the horizontal housing (121) based on the horizontal orientation of the horizontal housing (121).

The horizontal spray nozzle (122) may spray water on exhaust gas that flows into the horizontal housing (121) from a lower portion thereof and capture foreign particles contained in the exhaust gas so that they fall downward. The horizontal spray nozzle (122) may capture relatively large foreign particles. Moreover, the horizontal spray nozzle (122) may capture soluble gas contained in the exhaust gas.

The screw spray module (130) may comprise a screw housing (131), screw support shaft (132), screw blade (133), and screw spray nozzle (134). The screw spray module (130) may be disposed at an upper portion of the horizontal spray module (120). Moreover, in the screw spray module (130), if another module is disposed at a lower portion, it may be disposed at an upper portion of another module. The screw spray module (130) sprays water while causing the exhaust gas to rise from below in the shape of a whirlwind and may capture reactive by-products contained in the exhaust gas. The screw spray module (130) causes the exhaust gas to rise from below in the shape of a whirlwind and increases the retention time, thereby increasing the time of contact between the water and exhaust gas.

The screw housing (131) has a hollow interior and is formed in the shape of a cylinder having an open upper portion, and open lower portion. The screw housing (131) is formed at a prescribed height necessary for spraying water so that it makes contact with the exhaust gas that flows in from below. If a lower portion of the screw housing (131) is coupled with the horizontal spray module (120), it may be formed having the same diameter as the horizontal housing (121). If the screw housing (131) is formed using a different diameter from the horizontal housing (121), the area between the horizontal housing (121) may be sealed using a separate flange (not illustrated) or other method.

The screw support shaft (132) may be formed in the shape of a bar having a length that corresponds to the height of the screw housing (131). The screw support shaft (132) may be disposed on the central axis of the screw housing (131) in the interior of the screw housing (131).

The screw blade (133) may be secured between the screw housing (131) and the screw support shaft (132) so as to form a whirlwind shape in plate shape having a fixed width and length. The screw blade (133) may be formed having a width which corresponds to the distance between the screw housing (131) and screw support shaft (132). The outer surface of the screw blade (133) is attached so that it makes contact with the inner circumferential surface of the screw housing (131) and the inner surface makes contact with the external circumferential surface of the screw support shaft (132). For the screw blade (133), the internal space of the screw housing (131) may be formed as a screw passage (133a) having the shape of a whirlwind. With regard to the screw passage (133a), the exhaust gas that flows into the interior of the screw housing (131) may be raised in the shape of a whirlwind. Moreover, the screw passage (133a) may be formed as a passage having a cross-sectional area that is smaller than the cross-sectional area of the screw housing (121) so as to increase the frequency of contact and time of contact between the exhaust gas and water.

The screw spray nozzle (134) is disposed in the screw passage (133a) in the inner circumferential surface of the screw housing (131). Several screw spray nozzles (134) may be spaced apart in a circular direction along the screw passage (133a). Therefore, the screw spray nozzles (134) may be spaced apart at a fixed angle along the inner circumferential surface based on a horizontal orientation. Moreover, the screw spray nozzles (134) may be spaced and disposed at a fixed height based on a vertical orientation. The screw spray nozzle (134) sprays water toward the inside of the screw passage (133a). The screw spray nozzle (134) may spray water in an upward direction. Moreover, the screw spray nozzle (134) may spray water downward.

Moreover, the screw spray nozzle (134) may spray water in upward and downward directions simultaneously. If the screw spray nozzle (134) sprays water in a downward direction, this may increase the efficiency of capturing by-product particles. In other words, the exhaust gas flows and rises in the shape of a whirlwind inside the screw passage (133a) and as water is sprayed downward from the screw spray nozzle (134), the water is sprayed in a direction opposite to the flow of exhaust gas. Therefore, the water that is sprayed from the screw spray nozzle (134) makes contact with the exhaust gas more efficiently so that by-product particles can be captured. The screw spray nozzle (134) sprays fine water particles which may increase the frequency of contact between the water and exhaust gas.

The venturi spray module (140) may comprise a venturi housing (141), venturi plate (142), venture spray nozzle (143), and venturi guard (144). The venturi spray module (140) may be disposed at an upper portion of the screw spray module (130). Moreover, if another module is disposed at a lower portion of the venture spray module (140), it may be disposed at an upper part of another module. The venturi spray module (140) sprays water while causing the exhaust gas that flows inside to rise toward the centre.

The venturi spray module (140) causes the exhaust gas that flows in from the module disposed at a lower portion to rise toward the centre of the venturi housing (141) so that by-product particles contained in the exhaust gas fall downward. The venturi spray module (140) causes exhaust gas to flow differently to how exhaust gas flows in the screw spray module (130) disposed at a lower portion. In other words, the venturi spray module (140) causes exhaust gas to flow and gather toward the centre as it rises, while the screw spray module (130) causes exhaust gas to rise and flow in the shape of a whirlwind. Therefore, the venturi spray module (140) alters the flow of exhaust gas so that the exhaust gas makes contact with water more efficiently.

The venturi housing (141) has a hollow interior and is formed in the shape of a cylinder having an open upper portion, and open lower portion. The venturi housing (141) is formed at a prescribed height necessary for spraying water so that it makes contact with the exhaust gas flowing in from a lower portion. If a lower portion of the venturi housing (141) is coupled with the screw spray module (130), it may be formed using the same diameter as the screw housing (131). If the venturi housing (141) is formed using a different diameter from the screw housing (131), the area between the screw housing (131) may be sealed using a separate flange (not illustrated) or other method.

The venturi plate (142) is formed in the shape of a cone wherein the lower side inclines upward from the external diameter to the internal diameter, and is equipped with a hole (142a) in the centre thereof. The venturi plate (142) is formed having the external diameter thereof corresponding to the internal diameter of the venturi housing (141). The external circumferential surface of the venturi plate (142) is coupled so as to make contact with the inner circumferential surface of the venturi housing (141). The venturi plate (142) is disposed inside the venturi housing (141) in a horizontal orientation. Therefore, the venturi plate (142) can separate the interior space of the venturi housing (141) into a lower space and an upper space. The venturi plate (142) increases the speed at which the exhaust gas rises as it flows into the interior of the venturi housing (141) from below and causes it to raise toward the centre. The venturi plate (142) is formed in the shape of a cone wherein the horizontal cross sectional area decreases in the upward direction. The flow rate of exhaust gas flowing into the venturi plate (142) increases as it rises due to the venturi effect and passes through the venturi hole (142a).

The venturi spray nozzle (143) is disposed at an upper or lower portion of the venturi hole (142a). The venturi spray nozzle (143) sprays water from a lower portion of the venturi hole (142a) in an upward direction. Moreover, the venturi spray nozzle may spray water from an upper part of the venturi hole (142a) in a downward direction. The venturi spray nozzle (143) may spray water in the same direction as the flow of exhaust gas passing through the venturi hole (142a). The venturi spray nozzle (143) may increase the weight of by-product particles contained in the exhaust gas and cause them to fall downward. The venturi spray nozzle (143) may be fixed to a lower portion of the venturi hole (142a) through a separate venturi supply pipe (143a) that extends to the interior of a separate venturi housing (141).

The venturi guard (144) may be formed in the shape of a plate having a diameter that corresponds with or is larger than the diameter of the venturi hole (142a). The venturi guard (144) may be spaced apart from the top of the venturi hole (142a). The venturi guard (144) may cause the by-product particles that rise and pass through the venturi hole (142a) to collide with each other and fall downward. The venturi guard (144) may be spaced apart from the venturi plate (142) so that the exhaust gas can pass through the space thus formed and flow upward. The venturi guard (144) is not illustrated in detail, but may be fixed to the venturi plate (142) by a separate support bar. Moreover, the venturi guard (144) may be fixed to a lower portion of a module that is fixed to an upper portion thereof.

The pall spray module (150) may include a pall housing (151), lower support net (152), pall rings (153), and pall spray pipe (154).

The pall spray module (150) may be disposed at an upper portion of the venturi spray module (140), but, may be disposed at an upper portion if another module is disposed at a lower portion of the pall spray module (150). The pall spray module (150) causes exhaust gas that rises from below to make contact with the pall rings (153) so as to capture reactive by-products contained in the exhaust gas. Moreover, the pall spray module (150) may capture soluble gas contained in the exhaust gas by causing the exhaust gas to make contact with water, and the pall spray module (150) may increase the contact area between the water and exhaust gas by means of the pall ring (153). The pall spray module (150) may increase the time of contact between the exhaust gas and water by spraying water from above and wetting the surface of the pall rings (153). The pall spray module (150) sprays water of relatively large particle size and increases the size of fine water particles that rise from a lower portion to make them fall downward. The pall spray module (150) may reduce the moisture of fine particles discharged to the outside.

The interior of the pall housing (151) is hollow and it is formed in the shape of a cylinder having an open upper portion, and open lower portion. The pall housing (151) is formed at a prescribed height necessary for spraying water so that it makes contact with the exhaust gas that flowing in from below. If a lower portion of the pall housing (151) is coupled with the venturi spray module (140), it may be formed using the same diameter as the venturi housing (141). The pall housing (151) is formed having a different diameter to the venturi housing (141) and the area between the venturi housing (141) may be sealed using a method such as a separate flange (not illustrated).

The lower support net (152) may be formed in the shape of a plate having multiple support holes that pass vertically. The lower support net (152) may be formed in the shape of a perforated plate or mesh net. The external diameter of the lower support net (152) may have a diameter that corresponds with the inner diameter of the pall housing (151). The lower support net (152) may be attached in a horizontal orientation at a lower portion of the pall housing (151). The lower support net (152) may support multiple pall rings (153) that are disposed at a top portion.

The pall rings (153) may be formed in the shape of pall rings that are used in common scrubbers for treating exhaust gas. Pall rings (153) may be formed in the shape of a cylinder or enneahedron or hexahedron with increased surface area. Multiple pall rings (153) may be piled to a set height at the top of the lower support net (152). The pall rings (153) may increase the path in which the exhaust gas flows from a lower portion to an upper portion to increase the retention time of the exhaust gas, thereby increasing the degree of contact with water.

The pall spray pipe (154) is disposed at an upper portion of the pall rings (153) and sprays water onto an upper portion of the pall rings (153). The pall spray pipe (154) may be formed in the shape of a straight line or a cross. The pall spray pipe (154) may be formed as one or multiple units. The spray pipe (154) may be equipped having a spray hole(154a) on a lower side thereof to spray water. The spray hole (154a) may be formed as multiple units that are spaced apart in the direction of the length of the water spray pipe. The spray hole (154a) may be formed so as to spray water particles that are larger than the water particles that are sprayed from the screw spray nozzle (134) or the venturi spray nozzle (143). The pall spray pipe (154) sprays relatively large moisture particles and thereby captures fine moisture particles that flow in from below and may reduce the discharge of fine moisture particles to the outside of the packed tower for a scrubber (10).

The gas spray module (160) may comprise a gas housing (161) and a gas spray nozzle (162). Of the modules constituting the packed tower, the gas spray module (160) is disposed at above the modules that spray water. The gas spray module (160) sprays captured gas, such as nitrogen gas, in exhaust gas that rises from a lower portion and may capture or remove moisture contained in the exhaust gas. Moreover, the gas spray module (160) sprays captured gas at a rapid speed and forms negative pressure on the interior of the gas housing (161) to allow the exhaust gas to be discharged to the outside of the packed tower for a scrubber (10) more efficiently.

The gas housing (161) has a hollow interior and is formed in the shape of a cylinder having an open upper portion, and open lower portion. The gas housing (161) is formed at a prescribed height necessary for spraying captured gas so that it makes contact with the exhaust gas that flows in from below. If the lower portion of the gas housing (161) is coupled with the pall spray module (150), it may be formed having the same diameter as the pall housing (151). If the gas housing (161) is formed having a different diameter from the pall housing (151), the area between the pall housing (151) may be sealed through a separate flange (not illustrated) or another similar method.

The gas spray nozzle (162) may comprise a gas nozzle main body (162a), gas passage (162b), and gas spray hole (162c). The gas spray nozzle (162) is disposed inside the gas housing (161) and may provide an exhaust gas path through which the exhaust gas flowing in from below can pass through. The gas spray nozzle (162) may spray captured gas into the exhaust gas path.

The gas nozzle main body (162a) is formed in the shape of a ring having a fixed height and width. The gas nozzle main body (162a) may be shaped having the same or higher height than the height of the gas housing (161). The external circumferential surface of the gas nozzle main body (162a) may be formed so as to make contact with the inner circumferential surface of the gas housing (161). The gas nozzle main body (162a) may be integrally formed with the gas housing (161).

The gas passage (162b) may be formed in the shape of a ring on the inside of the gas nozzle main body (162a). The gas passage (162b) may provide a path through which captured gas can flow from the inside of the gas nozzle main body (162a) in a circular direction. The passage (162b) may be formed having a fixed cross sectional area in the direction of the flow of gas. The gas passage (162b) is not specifically illustrated, but it may be supplied with captured gas by connecting to the gas supply pipe that is connected through the gas passage (162b) from the outside.

The gas spray hole (162c) may be formed as multiple units that pass through the inner circumferential surface of the gas nozzle main body (162a) from the gas passage (162b). The gas spray hole (162c) may be formed as multiple units that are spaced apart along the inner circumferential surface of the gas nozzle main body (162a). The whole of the gas spray hole (162c) may be formed as one unit. In other words, the gas spray hole (162c) may be formed in the shape of a ring along the inner circumferential surface of the gas nozzle main body (162a). The gas spray hole (162c) may spray captured gas that flows through the gas passage (162b) towards the centre of the gas nozzle main body (162a). The gas that is sprayed from the gas spray hole (162c) makes contact with the exhaust gas that passes through the exhaust gas path and may cause moisture contained in the exhaust gas to evaporate. Moreover, the captured gas is sprayed at a rapid speed, forming negative pressure at a lower portion of the gas spray nozzle (162) to compensate for the pressure that is necessary for the exhaust gas to be efficiently discharged.

The upper discharge module (170) may comprise a top cover (171) and upper discharge pipe (172). The upper discharge module (170) is coupled with the gas spray module (160) that is disposed at a lower portion. The upper discharge module (170) discharges exhaust gas that flows in from the gas spray module (160) to the outside.

The top cover (171) has an open upper portion, and open lower portion and is formed in the shape of a cone where the diameter decreases in an upward direction.

The upper discharge pipe (172) has an open upper portion, and open lower portion and may be formed in the shape of a pipe having a uniform diameter. The lower portion of the upper discharge pipe (172) may be coupled with an upper portion of the top cover (171). The lower portion of the upper discharge pipe (172) is coupled with the top cover (171) and an upper part may be connected to a discharge pipe of a semiconductor process line.

Next will be described the operation of the packaged tower for a scrubber according to an embodiment of the present invention.

Exhaust gas flows into the inside of the lower inlet module (110) from the wet tank (40) that is disposed at a lower portion of the packed tower (10) for a scrubber. The exhaust gas flows into the interior of the horizontal housing (121) of the horizontal spray module (120) and rises upward. At this point, the exhaust gas rises upward from the entire surface area of the horizontal housing (121). The horizontal spray nozzle (122) sprays water toward the centre of the horizontal housing (121) so that the water makes contact with the rising exhaust gas. The water sprayed from the horizontal spray nozzle (122) makes contact with exhaust gas by-product particles so that the by-product particles fall downward. Moreover, the water sprayed from the horizontal spray nozzle (122) captures by making contact with soluble gas contained in the exhaust gas. The exhaust gas passes through the horizontal spray module (120) and flows to the top and flows into the screw spray module (130).

The screw spray module (130) causes the exhaust gas to pass through the screw passage (133a) and rise upward in whirlwind form. The screw spray module (130) causes exhaust gas to flow in a different form to the horizontal spray module (120) and causes exhausts gases to mix together and flow upward. Therefore, the exhaust gas makes contact with the water in a uniform fashion. The screw spray nozzle (134) sprays water through the screw passage (133a) and causes the water to make contact with by-product particles contained in the exhaust gas so that the by-product particles fall downward. Moreover, water sprayed from the screw spray nozzle (134) may capture by making contact with soluble gas that is contained in the exhaust gas. The exhaust gas passes through the screw spray module (130), flows upward and flows through the venturi spray module (140).

The venturi spray module (140) causes the exhaust gas to flow from inside the venturi housing (141) upward and flow toward the centre to pass through the venturi hole (142a). The venturi spray module (140) causes exhaust gas to flow differently from the screw spray module (130), causing exhaust gases to mix together and flow upward. In particular, the venturi spray module (140) causes exhaust gas to flow in a concentrated fashion through the venturi hole (142a) formed in the centre of the venturi plate (142) so as to increase the frequency of contact between the exhaust gas and water. Therefore, the exhaust gas makes contact with the water in a uniform fashion. The venturi spray nozzle (143) sprays water upward and makes the water make contact with by-product particles contained in the exhaust gas so that the by-product particles fall downward. Moreover, in the venturi spray module (140), the water sprayed from the venturi spray nozzle (143) may capture by making contact with soluble gas contained in the exhaust gas. The exhaust gas passes through the venturi spray module (140) and flows upward and flows through the pall spray module (150).

The pall spray module (150) causes exhaust gas to flow from the inside of the pall housing (151) upward so that it makes contact with the pall ring (153). The pass rings (153) are stacked at a fixed height to form a complex passage in the interior. The pall spray module (150) causes exhaust gas to flow in a different shape from the venturi spray module (140) and causes the exhausts gases to mix together and flow upward. Therefore, all exhaust gas passes through the passage formed through the pall rings (153) to make contact with the water. The pall spray pipe (154) sprays water from an upper portion of the pall ring (153) and causes it to flow downward along the surface of the pall ring (153) so as to make contact with the exhaust gas. Moreover, the pall spray pipe (154) sprays water particles that are relatively large in size compared to the venturi spray nozzle (143) and screw spray nozzle (134) disposed below, so as to capture fine water particles, and the fine water particles flow upward, which may reduce the amount of water discharged outside of the packed tower for a scrubber (10). The exhaust gas passes through the pall spray module (150) and upward and flows through the gas spray module (160).

The gas spray module (160) causes exhaust gas to flow from the interior of the gas housing (161) upward so as to make contact with the captured gas. The gas spray nozzle (162) sprays captured gas toward the centre of the gas housing (161) to remove moisture contained in the exhaust gas. Moreover, the gas spray nozzle (162) sprays captured gas at a rapid speed to form negative pressure inside the gas housing (161) so that the exhaust gas can flow upward more efficiently. The exhaust gas passes through the gas spray module (160) and may be discharged outside of the packed tower for a scrubber (10) through the upper discharge module (170).

The above explanation is just one embodiment of implementing the packed tower for a scrubber according to this invention. This invention is not limited to the above embodiment, and various modifications can be made without deviating from the scope of the appended claims.

### [Explanation of Symbols]

10: Packed tower for a scrubber
20: Burner component
30: Combustion component
40: Wet tank
110: Lower inlet module
111: Lower cover
112: Lower portion inlet pipe
120: Horizontal spray module
121: Horizontal housing
122: Horizontal spray nozzle
130: Screw spray module
131: Screw housing
132: Screw support shaft
133: Screw blade
134: Screw spray nozzle
140: Venturi spray module
141: Venturi housing
142: Venturi plate
143: Venturi spray nozzle
144: Venturi guard
150: Pall spray module
151: Pall housing
152: Lower support net
153: Pall ring
154: Pall spray pipe
160: Gas spray module
161: Gas housing
162: Gas spray nozzle
170: Upper discharge module
171: Top cover
172: Upper discharge pipe

## Claims

1. A packed tower (10) for a scrubber **characterised in** comprising:
a horizontal spray module (120), disposed at an upper portion of a lower inlet module (110), which sprays water while causing the exhaust gas that flows into the interior thereof to rise;
a screw spray module (130), disposed at an upper portion of the horizontal spray module, and
comprising a screw housing (131) in the shape of a cylinder having an open upper portion, open lower portion, and a hollow interior,
a screw support (132) shaft disposed on the central axis of the screw housing,
a screw blade (133) having an inner space formed as a screw passage in the shape of a whirlwind, and
at least 2 screw spray nozzles (134) which spray water on exhaust gas that flows through the screw passage and which are spaced along the inner circumferential surface of the screw housing,
which sprays water while causing exhaust gas which flows into the interior thereof to rise in whirlwind form;
a venturi spray module 140), disposed at an upper portion of the screw spray module, and comprising
a venturi housing (141) in the shape of a cylinder having an open upper portion, open lower portion, and a hollow interior,
a venturi plate (142) in the shape of a cone wherein the lower side inclines upward from the external diameter towards the internal diameter and which has a venturi hole in the centre, and
a venturi spray nozzle (143) that sprays water through the venturi hole, and a venturi guard (144) which is formed in the shape of a plate with a diameter that corresponds to or is larger than the diameter of the venturi hole and which is disposed at a distance from an upper portion of the venturi hole
which sprays water while causing the exhaust gas that flows into the interior thereof to flow upwards through the central area;
a pall spray module (150) , disposed at an upper portion of the venturi spray module, which sprays water while causing the exhaust gas that flows into the interior thereof to make contact with wet surface of stacked pall rings; and
a gas spray module (160), disposed at an upper portion of the pall spray module, which sprays captured gas in the exhaust gas

2. The packed tower for a scrubber of claim 1, wherein
the horizontal spray module (129) comprises
a housing (121) in the shape of a cylinder having an open upper portion, open lower portion, and a hollow interior, and
at least 2 horizontal spray nozzles (122) disposed spaced along the inner circumferential surface of the housing.

3. The packed tower for a scrubber of claim 1, wherein
the pall spray module (150) comprises
a housing (151) in the shape of a cylinder having an open upper portion, open lower portion, and a hollow interior, and
a lower support net (152) which is a plate with a plurality of holes that pass vertically and which is coupled with a lower portion of the pall housing,
stacked pall rings (153) disposed at an upper portion of the lower support net,
and a pall spray pipe (154) disposed at an upper portion of the pall housing and sprays water over the stacked pall rings.

4. The packed tower for a scrubber of claim 1, wherein
the gas spray module (160) comprises
a gas housing (161) having a hollow interior and formed in the shape of a cylinder having an open upper part and open lower part, and
a gas spray nozzle (162) which is disposed in the interior of the gas housing which sprays impinging gas to the exhaust gas flowing in from a lower portion, while
the gas spray nozzle (162) comprises
a gas nozzle main body which is formed in the shape of a ring and which is disposed on the interior of the gas housing,
a gas passage which is formed in the shape of a ring in the interior of the main body of the gas nozzle and provides a path for the impinging gas to flow through, and
a gas spray hole which passes through the inner circumferential surface of the main body of the gas nozzle from the gas passage so as to spray the impinging gas to the inside of the main body of the gas nozzle.

## Patentansprüche

1. Waschturm (10) für einen Wäscher, **dadurch gekennzeichnet, dass** er umfasst:
ein horizontales Sprühmodul (120), angeordnet in einem oberen Abschnitt eines unteren Einlassmoduls (110), das Wasser versprüht, während es ein Ansteigen des in seinem Inneren strömenden Abgases veranlasst;
ein Schneckensprühmodul (130), angeordnet in einem oberen Abschnitt des horizontalen Sprühmoduls, und
umfassend ein Schneckengehäuse (131) in der Form eines Zylinders mit einem offenen oberen Abschnitt, einem offenen unteren Abschnitt und einem hohlen Inneren,
einer Schneckenstützwelle (132), angeordnet an der mittleren Achse des Schneckengehäuses,
einen Schneckenflügel (133) mit einem Innenraum, ausgebildet als ein Schneckendurchgang in der Form eines Wirbelwinds, und
mindestens 2 Schneckensprühdüsen (134), die Wasser auf Abgas sprühen, das durch den Schneckendurchgang strömt, und die entlang der Innenumfangsfläche des Schneckengehäuses beabstandet sind,
das Wasser sprüht, während es Abgas, das in das Innere davon strömt, veranlasst, in Wirbelwindform aufzusteigen;
ein Venturisprühmodul (140), angeordnet in einem oberen Abschnitt des Schneckensprühmoduls und umfassend:
ein Venturigehäuse (141) in der Form eines Zylinders mit einem offenen oberen Abschnitt, einem offenen unteren Abschnitt und einem hohlen Inneren,
eine Venturiplatte (142) in der Form eines Kegels, wobei sich die Unterseite vom Außendurchmesser nach oben in Richtung des Innendurchmessers neigt, und die in der Mitte ein Venturiloch aufweist, und
eine Venturisprühdüse (143), die Wasser durch das Venturiloch sprüht, und
eine Venturischutzeinrichtung (144), die in der Form einer Platte mit einem Durchmesser ausgebildet ist, der dem Durchmesser des Venturilochs entspricht oder größer als dieser ist, und die in einer Entfernung von einem oberen Abschnitt des Venturilochs angeordnet ist,
das Wasser versprüht, während es das Abgas, das in sein Inneres strömt, veranlasst, durch den mittleren Bereich aufzusteigen;
ein Pall-Sprühmodul (150), angeordnet in einem oberen Abschnitt des Venturisprühmoduls, das Wasser versprüht, während es veranlasst, dass das in sein Inneres strömende Abgas die nasse Oberfläche gestapelter Pall-Ringe kontaktiert; und
ein Gassprühmodul (160), angeordnet in einem oberen Abschnitt des Pall-Sprühmoduls, das erfasstes Gas in das Abgas sprüht.

2. Waschturm für einen Wäscher nach Anspruch 1, wobei
das horizontale Sprühmodul (129) Folgendes umfasst:
ein Gehäuse (121) in der Form eines Zylinders mit einem offenen oberen Abschnitt, einem offenen unteren Abschnitt und einem hohlen Inneren, und
mindestens 2 horizontale Sprühdüsen (122), beabstandet angeordnet entlang der Innenumfangsfläche des Gehäuses.

3. Waschturm für einen Wäscher nach Anspruch 1, wobei
das Pall-Sprühmodul (150) Folgendes umfasst:
ein Gehäuse (151) in der Form eines Zylinders mit einem offenen oberen Abschnitt, einem offenen unteren Abschnitt und einem hohlen Inneren, und
ein unteres Stütznetz (152), das eine Platte mit einer Vielzahl von Löchern ist, die vertikal verlaufen, und das mit einem unteren Abschnitt des Pall-Gehäuses gekoppelt ist,
gestapelte Pall-Ringe (153), angeordnet an einem oberen Abschnitt des unteren Stütznetzes,
eine Pall-Sprühleitung (154), angeordnet an einem oberen Abschnitt des Pall-Gehäuses, die Wasser über die gestapelten Pall-Ringe sprüht.

4. Waschturm für einen Wäscher nach Anspruch 1, wobei
das Gassprühmodul (160) umfasst:
ein Gasgehäuse (161) mit einem hohlen Inneren und ausgebildet in der Form eines Zylinders mit einem offenen oberen Teil und einem offenen unteren Teil, und
eine Gassprühdüse (162), die im Inneren des Gasgehäuses angeordnet ist, die anprallendes Gas zu dem von einem unteren Abschnitt einströmenden Abgas sprüht, während
die Gassprühdüse (162) umfasst:
einen Gasdüsenhauptkörper, der in der Form eines Rings ausgebildet ist und der am Inneren des Gasgehäuses angeordnet ist,
einen Gasdurchgang, der in der Form eines Rings im Inneren des Hauptkörpers der Gasdüse ausgebildet ist und einen Weg bereitstellt, den das anprallende Gas durchströmen kann, und
ein Gassprühloch, das die Innenumfangsfläche des Hauptkörpers der Gasdüse vom Gasdurchgang durchläuft, sodass es das anprallende Gas zur Innenseite des Hauptkörpers der Gasdüse sprüht.

## Revendications

1. Tour à garnissage (10) pour épurateur **caractérisée en ce qu'**elle comprend:
un module de pulvérisation horizontal (120), disposé dans une partie supérieure d'un module d'entrée inférieur (110), qui pulvérise de l'eau tout en amenant le gaz d'évacuation qui s'écoule à l'intérieur à monter;
un module de pulvérisation à vis (130), disposé dans une partie supérieure du module de pulvérisation horizontal, et
comprenant un boîtier de vis (131) sous la forme d'un cylindre ayant une partie supérieure ouverte, une partie inférieure ouverte et un intérieur creux,
un arbre de support de vis (132) disposé sur l'axe central du boîtier de vis,
une aube de vis (133) ayant un espace intérieur formé comme un passage de vis sous la forme d'un tourbillon, et
au moins deux buses de pulvérisation à vis (134) qui pulvérisent de l'eau sur le gaz d'évacuation qui s'écoule dans le passage de vis et qui sont espacées le long de la surface circonférentielle intérieure du boîtier de vis,
qui pulvérise de l'eau tout en amenant le gaz d'évacuation qui s'écoule à l'intérieur à monter sous forme de tourbillon;
un module de pulvérisation de Venturi (140), disposé dans une partie supérieure du module de pulvérisation à vis, et comprenant
un boîtier de Venturi (141) sous la forme d'un cylindre ayant une partie supérieure ouverte, une partie inférieure ouverte et un intérieur creux,
une plaque de Venturi (142) sous la forme d'un cône dans laquelle le côté inférieur s'incline vers le haut depuis le diamètre extérieur vers le diamètre intérieur et qui a un trou de Venturi au centre, et
une buse de pulvérisation de Venturi (143) qui pulvérise de l'eau par le trou de Venturi, et
une protection de Venturi (144) qui est formée sous la forme d'une plaque avec un diamètre qui correspond ou est supérieur au diamètre du trou de Venturi et qui est disposée à une distance d'une partie supérieure du trou de Venturi,
qui pulvérise de l'eau tout en amenant le gaz d'évacuation qui s'écoule à l'intérieur à s'écouler vers le haut à travers la zone centrale;
un module de pulvérisation de Pall (150), disposé dans une partie supérieure du module de pulvérisation de Venturi, qui pulvérise de l'eau tout en amenant le gaz d'évacuation qui s'écoule à l'intérieur à entrer en contact avec la surface humide d'anneaux de Pall empilés; et
un module de pulvérisation de gaz (160), disposé dans une partie supérieure du module de pulvérisation de Pall, qui pulvérise du gaz capturé dans le gaz d'évacuation.

2. Tour à garnissage pour épurateur selon la revendication 1, dans laquelle
le module de pulvérisation horizontal (129) comprend
un boîtier (121) sous la forme d'un cylindre ayant une partie supérieure ouverte, une partie inférieure ouverte et un intérieur creux, et
au moins deux buses de pulvérisation horizontales (122) disposées à distance le long de la surface circonférentielle intérieure du boîtier.

3. Tour à garnissage pour épurateur selon la revendication 1, dans laquelle
le module de pulvérisation de Pall (150) comprend
un boîtier (151) sous la forme d'un cylindre ayant une partie supérieure ouverte, une partie inférieure ouverte et un intérieur creux, et
un filet de support inférieur (152) qui est une plaque avec une pluralité de trous qui passent verticalement et qui est couplé à une partie inférieure du boîtier de Pall,
des anneaux de Pall empilés (153) disposés dans une partie supérieure du filet de support inférieur,
et un conduit de pulvérisation de Pall (154) disposé dans une partie supérieure du boîtier de Pall et qui pulvérise de l'eau sur les anneaux de Pall empilés.

4. Tour à garnissage pour épurateur selon la revendication 1, dans laquelle
le module de pulvérisation de gaz (160) comprend
un boîtier de gaz (161) ayant un intérieur creux et formé sous la forme d'un cylindre ayant une partie supérieure ouverte et une partie inférieure ouverte, et
une buse de pulvérisation de gaz (162) qui est disposée à l'intérieur du boîtier de gaz qui pulvérise le gaz incident sur le gaz d'évacuation provenant d'une partie inférieure, tandis que
la buse de pulvérisation de gaz (162) comprend
un corps principal de buse de gaz qui est formé sous la forme d'un anneau et qui est disposé à l'intérieur du boîtier de gaz,
un passage de gaz qui est formé sous la forme d'un anneau à l'intérieur du corps principal de la buse de gaz et fournit un passage pour que le gaz incident s'écoule à travers lui, et
un trou de pulvérisation de gaz qui passe à travers la surface circonférentielle intérieure du corps principal de la buse de gaz depuis le passage de gaz de manière à pulvériser le gaz incident à l'intérieur du corps principal de la buse de gaz.
